# EUROPÄISCHE PATENTSCHRIFT

(11) **EP 0 700 549 B1**
(45) Veröffentlichungstag und Bekanntmachung des Hinweises auf die Patenterteilung: **05.03.1997**
(21) Anmeldenummer: 94915049.4
(22) Anmeldetag: 18.05.1994
(51) Int. Cl.: G07B 15/00, G07F 7/08

(54) **EINRICHTUNG ZUR ABRECHNUNG DER NUTZUNG GEBÜHRENPFLICHTIGER WEGSTRECKEN**
DEVICE FOR CHARGING FOR THE USE OF TOLL ROADS
DISPOSITIF PERMETTANT D'EFFECTUER UN DEBIT CORRESPONDANT A L'UTILISATION DE TRON ONS A PEAGE

(30) Priorität: 28.05.1993 DE 4318357; 01.10.1993 DE 4334160
(43) Veröffentlichungstag der Anmeldung: 13.03.1996
(73) Patentinhaber: MANNESMANN Aktiengesellschaft, 40213 Düsseldorf (DE)
(72) Erfinder: HERDEG, Wolfgang, D-73479 Ellwangen (DE); WIDL, Andreas, D-81667 München (DE)
(74) Vertreter: Presting, Hans-Joachim, Dipl.-Ing.
(86) Internationale Anmeldenummer: DE9400586
(87) Internationale Veröffentlichungsnummer: WO9428511

(56) Entgegenhaltungen:
- EP-A- 0 061 373
- EP-A- 0 380 377
- EP-A- 0 401 192
- EP-A- 0 425 961
- EP-A- 0 508 405
- VEHICLE NAVIGATION & INFORMATION SYSTEMS CONFERENCE PROCEEDINGS, 1. Oktober 1991, P-253, Part 2, Seiten 977-987, XP000357202; KOMANECKY : 'IVHS Applications of Smart Cards'

## Beschreibung

Die Erfindung betrifft eine Einrichtung zur Abrechnung der Nutzung gebührenpflichtiger Wegstrecken durch ein Fahrzeug.

In der nicht vorveröffentlichten auf die Anmelderin zurückgehenden Patentanmeldung DE-P 43 10 099.6 ist eine Einrichtung beschrieben, die ein im jeweiligen Fahrzeug mitgeführtes elektronisches Abrechnungsgerät umfaßt, das fortlaufend von außen gesendete Daten zur Bestimmung der geographischen Fahrzeugposition empfängt (z.B. Satellitennavigation) und auswertet oder unmittelbar Positionsdaten empfängt (z.B. Funkpeilsystem). Wesentlicher Teil der Einrichtung ist eine Speichereinheit, die vorgegebene geographische Positionen (Identifizierungspunkte) gespeichert hat, welche eine eindeutige Charakterisierung der einzelnen gebührenpflichtigen Wegstrecken ermöglichen. Eine Recheneinheit vergleicht jeweils die aktuell ermittelten oder empfangenen Fahrzeugpositionsdaten mit den Positionsdaten der Identifizierungspunkte und kann durch einen Entscheidungsalgorithmus eindeutig ermitteln, ob eine gebührenpflichtige Wegstrecke vom Fahrzeug benutzt wird. Wenn eine gebührenpflichtige Streckennutzung ermittelt wird, nimmt die Einrichtung auf einem Speichermedium (z.B. Chip-Karte) eine entsprechende Verbuchung vor, indem von einem in dem Speichermedium eingetragenen Gebührenguthaben der jeweilige Streckentarif abgezogen wird.

Dieses System zur fahrzeuginternen Nutzungsabrechnung gewährleistet einen optimalen Datenschutz, da die Buchungsvorgänge und die Erfassung der geographischen Fahrzeugposition nur im Fahrzeug selbst stattfinden. Es erfolgt keine externe Erfassung und Registrierung der von einem Fahrzeug zurückgelegten gebührenpflichtigen Wegstrecken, da keine Informationen über die Fahrstrecken und die Nutzungskosten das Fahrzeug verlassen.

Zur Abrechnung von Gebühren für die Nutzung von Brücken oder Tunneln sind grenzstationsähnliche Abrechnungsstationen üblich, an denen durch Personal oder Münzzahlungsautomaten die jeweilige Gebühr erhoben wird. Für die Gebührenabrechnung von Autobahnabschnitten wird in Frankreich und Italien ein System benutzt, bei dem an der Einfahrstelle der Autobahn und an der Übergangsstelle von einem gebührenfreien zu einem gebührenpflichtigen Autobahnabschnitt jeweils vom Fahrzeugführer ein Ticket gezogen wird, auf dem die Einfahrstelle maschinell lesbar vermerkt ist. An der Ausfahrstelle oder an der Übergangsstelle von einem gebührenpflichtigen zu einem gebührenfreien Autobahnabschnitt kann dann anhand dieses Tickets die benutzte Gesamtstrecke ermittelt und die jeweilige Benutzungsgebühr nach dem Tarif berechnet und kassiert werden. Dieses System basiert auf stationären Einheiten zur Abrechnung, nämlich auf Erfassungsstationen mit Ticketautomaten, Schranken und Lichtanlagen. Die Bezahlung erfolgt dabei vielfach auch bargeldlos z.B. über Kreditkarten.

Die Druckschrift EP-A-0 380 377 befaßt sich mit einem Abrechnungssystem unterschiedlicher Dienstleistungen aus unterschiedlichen "Nutzungsgebieten". Zu derartigen Nutzungsgebieten gehört auch die Autobahngebührenerhebung. Basis des Systems sind Abrechnungszentralen (Rechner), die mit Abrechnungsautomaten zur Gebührenerfassung verbunden sind sowie verschiedene Speicherkarten, in denen Guthabenbeträge eingespeichert sind. Durch Eingabe der mobilen Speicherkarte in den Abrechnungsautomaten (z.B. Telefon, Parkautomat, Autobahngebührenabrechnungsautomat) kann eine entsprechende Abbuchung auf der Speicherkarte erfolgen. Kennzeichnend hierfür ist, daß der jeweilige Abbuchungsbetrag von dem jeweiligen (fest aufgestellten) Abbuchungsautomaten vorgegeben wird.

In Spalte 9, Zeile 5 bis 8, wird erwähnt, daß auch mobile Kartenleser eingesetzt werden können, die über drahtlose Verbindungen mit den eigentlichen Abrechnungsautomaten kommunizieren können. Ein derartiger Kartenleser ist nicht mit einem vom Fahrzeug mitgeführten Abrechnungsgerät der anmeldungsgemäßen Art vergleichbar, denn es ist nicht in der Lage, autark Abbuchungsvorgänge vornehmen zu können.

In der Druckschrift EP-A-0 401 192 ist ein Autobahngebührenabrechnungssystem offenbart, bei dem zum Zwecke der Abbuchung der fälligen Nutzungsgebühren ein Datenaustausch zwischen einem fahrzeuginternen und einem am Straßenrand fest aufgestellten Gerät stattfindet. Eine Gebührenabrechnung, die allein über ein fahrzeuginternes Gerät abgewickelt wird, wird auch in dieser Schrift nicht in Erwägung gezogen.

Das eingangs beschriebene System zur fahrzeuginternen Nutzungsabrechnung bietet einen hohen Komfort, da es während der Nutzung der Wegstrecken durch das jeweilige Fahrzeug völlig automatisch arbeitet und, solange das Gebührenguthaben auf dem mitgeführten Speichermedium ausreichend ist, keinerlei Bargeldverkehr und auch keine Fahrstops erfordert. Seine Anwendung ist jedoch beschränkt auf das jeweilige Nutzungsabrechnungsgebiet, für das diese Art der Gebührenabrechnung von vornherein vorgesehen ist. Sobald das Fahrzeug in ein Gebiet mit einem Nutzungsabrechnungssystem mit stationären Einheiten zur Gebührenabrechnung einfährt, ist das fahrzeuginterne Nutzungsabrechnungssystem mangels Kompatibilität nicht mehr anwendbar.

Aufgabe der Erfindung ist es, eine Einrichtung zur Abrechnung der Nutzung gebührenpflichtiger Wegstrecken in unterschiedlichen Nutzungsgebieten anzugeben, wobei lediglich in einzelnen Nutzungsgebieten stationäre Einheiten zur Gebührenabrechnung aufgestellt sind.

Gelöst wird diese Aufgabe durch eine Einrichtung mit den Merkmalen des Patentanspruchs 1. Vorteilhafte Weiterbildungen der Erfindung sind durch die Merkmale der Unteransprüche 2 und 3 gekennzeichnet.

Der Grundgedanke der Erfindung liegt darin, die Kompatibilität zwischen dem fahrzeuginternen Nutzungsabrechnungssystem mit dem vom Fahrzeug mitgeführten Nutzungsabrechnungsgerät A, das an sich nur für das Nutzungsabrechnungsgebiet N1 vorgesehen ist, und dem Nutzungsabrechnungssystem B mit stationären Einheiten für das Nutzungsgebiet N2, das außerhalb von N1 liegt, dadurch herzustellen, daß sowohl das vom Fahrzeug mitgeführte Abrechnungsgerät A als auch die stationären Einheiten des Nutzungsabrechnungssystems B jeweils mit Sende-/Empfangseinrichtungen gekoppelt sind, die einen gegenseitigen Datenaustausch auf drahtlosem Wege ermöglichen. Vorzugsweise arbeiten die Sende-/Empfangseinrichtungen im Frequenzbereich von HF- oder Infrarot- oder Ultraschallanlagen. Der stattfindende Datenaustausch ermöglicht eine Kompatibilisierung zwischen den verschiedenen Systemen und somit eine Nutzungsabrechnung für das Nutzungsgebiet N2 nach den Abrechnungsregeln des vom Fahrzeug mitgeführten Abrechnungsgeräts, wobei selbstverständlich die Streckentarife des Nutzungsgebiets N2 berücksichtigt werden.

Dies erfolgt z.B. in der Weise, daß bei Einfahrt des mit dem Abrechnungsgerät für N1 ausgestatteten Fahrzeugs in das Nutzungsgebiet N2, d.h. beim Passieren einer entsprechenden Abrechnungsstation von dieser Abrechnungsstation automatisch ein Signal an das Fahrzeug gesendet wird, mit dem abgefragt wird, ob das Abrechnungsgerät in einem ordnungsgemäßen Betriebszustand ist, d.h. eingeschaltet und mit einem ausreichenden Gebührenguthaben versehen ist. Bei ordnungsgemäßem Zustand wird ein entsprechendes In-Ordnung-Signal von der Sendeeinrichtung des mitgeführten Abrechnungsgerätes A an die stationäre Einheit zurückgesendet. Damit erhält das Fahrzeug die Berechtigung zum Einfahren in die gebührenpflichtige Wegstrecke des Nutzungsgebiets N2, d.h., daß beispielsweise eine Absperrschranke geöffnet oder eine Lichtsignalanlage auf "Durchfahrt erlaubt" geschaltet wird. Zum Schutz vor Manipulationen, die auf eine "entgeltfreie" Wegstreckennutzung abzielen, ist es vorteilhaft, den Dialog zwischen den Sendeeinrichtungen nur in verschlüsselter Form zu führen.

Es kann in dem Abrechnungsgerät A eine fortlaufende Gebührenabrechnung entsprechend der jeweils gerade abgefahrenen gebührenpflichtigen Teilstrecke erfolgen, indem eine Streckenermittlung wie im Nutzungsgebiet N1 z.B. auf der Basis der Satellitennavigation erfolgt. Es kann aber auch vorgesehen sein, die Abrechnung der Gesamtstrecke erst beim Ausfahren aus dem Nutzungsgebiet N2 durchzuführen, wobei wiederum ein automatischer Datenaustausch bezüglich der relevanten Abrechnungsdaten zwischen dem Abrechnungsgerät und der entsprechenden stationären Einheit über die Sende-/Empfangseinrichtungen erfolgt.

Um die Geldzahlungen für die Nutzung im Nutzungsgebiet N2 durchzuführen, empfiehlt sich ein etwa mit der heute üblichen Kreditkartenabrechnung vergleichbarer Weg. Hierzu wird beispielsweise in einem Rechnersystem des Betreibers des stationären Nutzungsabrechnungssystems B der Umfang der jeweiligen Nutzung festgehalten. Das kann in der Weise geschehen, daß die Identifizierungsdaten der Einfahrstelle beim Einfahren in das Nutzungsgebiet N2 an das Abrechnungsgerät A gesendet und dort gespeichert werden und bei der Ausfahrt der Speicherinhalt von der Ausfahrstation wieder abgerufen wird. Damit kann die zurückgelegte Wegstrecke von dem Rechnersystem ermittelt und der entsprechende Tarif einem Konto des Betreibers des Nutzungsabrechnungssystems für das Nutzungsgebiet N1 belastet werden. Der Fahrzeugführer zahlt also seine Nutzungsgebühren für das Nutzungsgebiet N2 indirekt über den Betreiber des Abrechnungssystems für das Nutzungsgebiet N1, an den er im voraus bereits seine Geldzahlung für den Erwerb eines Gebührenguthabens geleistet hat. Es ist nicht erforderlich, irgendwelche fahrzeugidentifizierenden Daten für die Abrechnung zu speichern. Für den Fahrzeugführer ist der Streckentarif auf jeden Fall bereits von seinem Gebührenguthaben auf seiner Speicherkarte abgebucht, sobald er das Nutzungsgebiet N2 verlassen hat. Zum Schutz gegen Abrechnungsmanipulationen könnte jeweils eine Speicherkartenidentnummer, die aber keine Rückschlüsse auf das Fahrzeug oder den Karteninhaber zuläßt, da sie anonym verkauft wurde, erfaßt und an den Betreiber des Abrechnungssystems für das Nutzungsgebiet N1 übermittelt werden. Dieser könnte feststellen, ob aufgrund der für diese Karte erfaßten, aber anonym erfolgten Auffüllungen des Gebührenguthabens diese Nutzungsdaten plausibel sind.

Eine alternative Möglichkeit zur Verrechnung der Nutzungen im Nutzungsgebiet N2 ist darin zu sehen, daß auch vorgesehen sein kann, die Nutzungsbeträge, die an den Betreiber des Abrechnungssystems B abzuführen sind, separat auf der Speicherkarte für das aktuelle Gebührenguthaben des Fahrzeugführers zu vermerken. Bei der Ausfahrt aus dem Nutzungsgebiet N2 könnten die entsprechenden Beträge über die Sende-/Empfangseinrichtungen abgerufen und, wie zuvor beschrieben, abgerechnet werden. Es wäre auch möglich, die Abführung der Gebühren an den Betreiber des Abrechnungssystems B zu dem Zeitpunkt vorzunehmen, wenn der Eigentümer der Speicherkarte sein Gebührenguthaben wieder auffüllt, indem erst dann die abzuführenden Beträge aus der Speicherkarte ausgelesen und einem Konto des Betreibers von B gutgeschrieben werden. Letzteres wäre aber mit dem Nachteil behaftet, daß die Gebührenabführung unter Umständen mit erheblicher zeitlicher Verzögerung stattfinden würde oder sogar ganz unterbleiben könnte, weil die Speicherkarte z.B. verlorengegangen ist.

Wenn das Nutzungsgebiet N2 für den Abrechnungsmodus des Nutzungsgebiets N1 "geöffnet" wird, empfiehlt es sich, auch im Wegstreckennetz von N2 Stationen (z.B. Automaten an Raststätten oder Mautstationen) vorzusehen, an denen das Gebührenguthaben der Speicherkarte gegen entsprechendes Entgelt wieder aufgefüllt werden kann. Die dort eingehenden Beträge könnten vom Betreiber von N2 vereinnahmt und einem Konto des Betreibers von N1 gutgeschrieben werden.

Durch die erfindungsgemäße Weiterbildung eines fahrzeuginternen Nutzungsabrechnungssystems ist ein System geschaffen, das zu andersgearteten Abrechnungssystemen mit stationären Einheiten kompatibel ist und daher dem Fahrer des Fahrzeugs die Nutzung "fremder" gebührenpflichtiger Wegstrecken erlaubt, ohne die Modalitäten des fremden Nutzungsabrechnungssystems selbst im einzelnen kennen zu müssen.

Das Mitführen von Fremdwährungen erübrigt sich. Abrechnungsbedingte Fahrstops können weitgehend entfallen, zumindest können die Stillstandszeiten auf ein Minimum beschränkt werden. Der gerätetechnische Zusatzaufwand für diese Lösung ist vergleichsweise gering.

## Patentansprüche

1. Einrichtung zur Abrechnung der Nutzung von gebührenpflichtigen Wegstrecken, die von einem Fahrzeug innerhalb eines Nutzungsabrechnungsgebiet N1 zurückgelegt werden, mit einem vom Fahrzeug mitgeführten Nutzungsrechnungsgerät A, welches als elektronisches Gerät ausgebildet ist, mit einem Empfänger für Daten zur Bestimmung der geografischen Position des Fahrzeugs, mit einer Speichereinheit zur Speicherung von geografischen Positionen, die die einzelnen gebührenpflichtigen Wegstrecken des Nutzungsabrechnungsgebiets N1 eindeutig charakterisieren, und mit einer Recheneinheit, die durch Vergleich der Fahrzeugpositionsdaten mit den charakterisierenden Positionsdaten der gebührenpflichtigen Wegstrecken anhand eines Entscheidungsalgorythmus eindeutig die Benutzung gebührenpflichtiger Wegstrecken ermittelt und auf einem mitgeführten Speichermedium mit einem Gebührenguthaben die Abbuchung des jeweiligen Streckentarifs vornimmt, wobei das Nutzungsabrechnungsgerät A zur fahrzeuginternen Nutzungsabrechnung im Hinblick auf gebührenpflichtige Wegstreckennutzungen des Fahrzeugs In einem zweiten (außerhalb von N1 gelegenen) Nutzungsgebiet N2, welches mit Einheiten eines stationären Nutzungsabrechnungssystems B ausgestattet ist, ebenso wie die Einheiten des stationären Nutzungsabrechnungssystems B jeweils mit drahtlos arbeitenden Sende-/Empfangseinrichtungen gekoppelt ist, die miteinander in Datenaustauschkontakt treten, sobald das Fahrzeug eine Einheit des stationären Nutzungsabrechnungssystems B passiert.

2. Einrichtung nach Anspruch 1,
dadurch gekennzeichnet,
daß die drahtlosen Sende-/Empfangseinrichtungen im Frequenzbereich von HF- oder Infrarot- oder Ultraschallanlagen arbeiten.

3. Einrichtung nach Anspruch 1 oder 2,
dadurch gekennzeichnet,
daß der Dialog zwischen den Sende/Empfangseinrichtungen der Nutzungsabrechnungssysteme A und B in verschlüsselter Form erfolgt.

## Claims

1. Device for charging for the use of sections of road subject to tolls to be covered by a vehicle within a usage charging region N1, comprising a usage calculation device A in the form of an electronic device, a receiver for data for determining the geographical position of the vehicle, a storage unit for storing geographical positions which unequivocally characterise the individual sections of road of the usage charging region N1 subject to a toll, and comprising a computing unit which unequivocally recognises the use of sections subject to a toll by comparison of the vehicle position data by means of a decision algorithm and enters the charging of the respective section tarif on a storage medium carried therewith with a fee note, wherein the usage charging device A for the on-board usage charging in respect of use by the vehicle of sections of road subject to a toll in a second usage region N2 (outside N1), which is equipped with units of a stationary usage charging system B, just like the units of the stationary usage charging system B, is respectively coupled to wirelessly operating transmitting/receiving devices, which come into data-exchanging contact with one another as soon as the vehicle passes one unit of the stationary usage charging system B.

2. Device according to claim 1, characterised In that the wirelessly operating transmitting/receiving devices operate in the frequency band of HF or infrared or ultrasound appliances.

3. Device according to claim 1 or 2, characterised in that the dialogue between the transmitting/receiving devices of the usage charging systems A and B is effected in encrypted form.

## Revendications

1. Dispositif pour le décompte de l'usage de tronçons à péage, qui sont parcourus par un véhicule à l'intérieur d'une zone de décompte d'usage N1, comportant un appareil de calcul d'usage A embarqué sur le véhicule et réalisé sous forme d'un appareil électronique, un récepteur de données pour la détermination de la position géographique du véhicule, une unité de stockage pour le stockage de positions géographiques qui caractérisent de façon univoque les tronçons à péage individuels de la zone de décompte d'usage NI, et une unité de calcul qui, par la comparaison des données de positions du véhicule avec les données de positions caractéristiques des tronçons à péage, détermine au moyen d'un algorithme de décision, de façon univoque, l'utilisation de tronçons à péage et réalise sur un moyen de stockage embarqué avec un avoir de taxes la déduction du tarif du tronçon correspondant, l'appareil de décompte d'usage A pour le décompte d'usage dans le véhicule en vue d'usages de tronçons à péage du véhicule, étant couplé, dans une seconde zone d'usage N2 (située à l'extérieur de N1), qui est équipée d'unités d'un système de décompte d'usage stationnaire B, ainsi que les unités du système de décompte d'usage stationnaire B, à chaque fois à des dispositifs d'émission et de réception travaillant sans fil, qui entrent en contact d'échange de données dès que le véhicule passe une unité du système de décompte d'usage stationnaire B.

2. Dispositif selon la revendication 1,
caractérisé en ce que les dispositifs d'émission et de réception sans fil travaillent dans la bande de fréquences d'installations à hautes fréquences, à infrarouge ou à ultrasons.

3. Dispositif selon l'une des revendications 1 ou 2,
caractérisé en ce que le dialogue entre les dispositifs d'émission et de réception des systèmes de décompte d'usage A et B est réalisé sous une forme codée.
